# EUROPÄISCHE PATENTSCHRIFT

(11) **EP 1 586 788 B1**
(45) Veröffentlichungstag und Bekanntmachung des Hinweises auf die Patenterteilung: **26.09.2007**
(21) Anmeldenummer: 05007503.5
(22) Anmeldetag: 06.04.2005
(51) Int. Cl.: F16F 1/32

(54) **Wellfeder mit definierter progressiver Federkennlinie**
Wave spring with progressive load-deflection characteristics
Ressort ondulé avec caractéristiques progressives

(30) Priorität: 17.04.2004 DE 102004018711
(43) Veröffentlichungstag der Anmeldung: 19.10.2005
(73) Patentinhaber: Muhr und Bender KG, 57439 Attendorn (DE)
(72) Erfinder: Heim, Alexander, Dipl.-Ing., 88069 Tettnang (DE); Rinsdorf, Andreas, Dr.-Ing., 57258 Freudenberg (DE)
(74) Vertreter: Neumann, Ernst Dieter

(56) Entgegenhaltungen:
- DE-A1- 2 600 946
- DE-A1- 10 321 800
- PATENT ABSTRACTS OF JAPAN Bd. 2000, Nr. 01, 31. Januar 2000 (2000-01-31) & JP 11 270605 A (MUSASHI SEIMITSU IND CO LTD), 5. Oktober 1999 (1999-10-05)
- PATENT ABSTRACTS OF JAPAN Bd. 1997, Nr. 06, 30. Juni 1997 (1997-06-30) & JP 09 032874 A (NHK SPRING CO LTD), 4. Februar 1997 (1997-02-04)

## Beschreibung

Die Erfindung betrifft eine axial wirksame Wellfeder mit einem geschlossenem Ringkörper mit einer zentralen x-Achse, der über dem Umfang in Richtung der x-Achse periodisch gewellt ist, wobei die Wellenlinie zwischen einer Mehrzahl gleich großer Minima und gleich großer Maxima monoton steigend oder fallend verläuft, und wobei in den Minima und den Maxima der Wellenlinie Anlagepunkte des Ringkörpers gegenüber achsnormalen Anlageflächen gebildet werden. Solche Wellfedern nach dem Stand der Technik weisen eine lineare oder stetig progressive Federkennlinie auf, die durch einen etwa sinusförmigen Verlauf der Wellenlinie über dem Umfang betrachtet vorgegeben ist. Eine derartige lineare oder stetig progressive Federrate ist für bestimmte Anwendungsfälle ungeeignet. Auch ist der Verlauf der Federrate solcher Wellfedern absolut gesehen für manche Anwendungsfälle unzureichend.

Aus der DE 26 00 946 A1 ist eine Wellfeder, insbesondere für hydraulische Teleskopschwingungsdämpfer für Kraftfahrzeuge bekannt, bei der die Amplituden am inneren Umfang kleiner sind, als am äußeren Umfang. Über dem Umfang betrachtet sind die Wellen auf jedem Radius stetig und gleichförmig.

Aus der älteren Patentanmeldung DE-A-103 21 800 der Anmelderin ist eine Wellfeder mit stufenweise progressiver Kennlinie bekannt. Diese weist jedoch über dem Umfang einen Wellenlinienverlauf mit absoluten und relativen Minima und Maxima unterschiedlicher Größe auf und betrifft damit eine andere Art.

Hiervon ausgehend ist es Aufgabe der vorliegenden Erfindung Wellfedern der eingangs genannten Art bereitzustellen, die eine gestuft zunehmend progressive Kennlinie aufweisen.

Die Lösung hierfür besteht darin, daß der Ringkörper von jedem Minimum und Maximum ausgehend nach beiden Seiten, d.h. in jeder Umfangsrichtung, jeweils zumindest zwei aneinander anschließende Wellenlinienabschnitte aufweist, die bei zunehmender axialer Belastung einzeln nacheinander flachgedrückt werden und mit den Anlageflächen zur Anlage zu bringen sind.

Hierbei ist insbesondere vorgesehen, daß sich die Anlagepunkte des Ringkörpers an den Enden der freien Wellenlinienbereiche gegenüber den Anlageflächen bei zunehmender axialer Belastung diskontinuierlich von den ursprünglichen Minima und Maxima entfernen.

Die Lösung besteht weiterhin darin, daß der Ringkörper von jedem Minimum und Maximum ausgehend nach beiden Seiten, d.h. in jeder Umfangsrichtung, jeweils zumindest zwei aneinander anschließende Wellenlinienabschnitte aufweist, die jeweils den Krümmungslinien von am freien Ende mit einer Einzellast belasteten Biegebalken entsprechen, wobei den Krümmungslinien der einzelnen Wellenlinienabschnitte mit zunehmendem Abstand von den ursprünglichen Minima und Maxima zunehmende Einzellasten zugrunde liegen.

Mit den hiermit angegebenen Mitteln kann die Federkennlinie in Bereiche unterschiedlicher Federraten untergliedert werden, wobei in aneinander anschließenden Hubbereichen die Federrate im jeweils folgenden Hubbereich jeweils größer ist als im jeweils vorhergehenden Hubbereich, ausgehend von der Ausgangshöhe h der Wellfeder.

Die Höhen der einzelnen Hubbereiche sind durch die Wahl der Länge und Krümmung der einzelnen Wellenlinienabschnitte und damit der sich verändernden Anlagepunkte im wesentlichen frei wählbar. Das gleiche gilt für die jeweiligen Federraten der einzelnen Hubbereiche, die im wesentlichen abhängen von der Stärke der Krümmung der Krümmungslinie der einzelnen Wellenlinienabschnitte.

Durch die Form der Wellenlinie ändern sich die Krafteinleitungspunkte während der zunehmenden Verkürzung bzw. Einfederung der Wellfeder (zunehmendem Hub) definiert. Ab einer jeweils definierten Einfederung entsprechend dem Flachdrücken und Zuranlagebringen eines Wellenlinienabschnitts, wird die freie Wellenlinienlänge der Wellfeder zwischen den Anlagepunkten (Lasteinleitungspunkten) definiert verkürzt und die Federrate steigt wie beabsichtigt sprungartig.

In bevorzugter Ausführung schließen die einzelnen Wellenlinienabschnitte mit engen Radien aneinander an.

Für den Gesamtverlauf der Wellenlinie ist vorgesehen, daß über dem Umfang zumindest zwei Minima und zwei Maxima vorhanden sind. Eine höhere Anzahl kann jedoch frei gewählt werden.

Der Verlauf der einzelnen Wellenlinienabschnitte ist so gewählt, daß jeweils etwa gleichzeitig ein Flachdrücken eines Wellenlinienabschnitts und ein Sichanlegen eines flachgedrückten Wellenlinienabschnitts an einer Anlagefläche zustande kommt bzw. eintritt. Zu diesem Zeitpunkt ändert sich der Anlagepunkt der Wellfeder vom ursprünglichen bzw. vorherigen Anlagepunkt im wesentlichen sprungartig zu dem Endpunkt des gerade flachgedrückten Wellenlinienabschnitts hin. Der gleiche Vorgang wiederholt sich dann mit dem nächsten Wellenlinienabschnitt, der sich zu Beginn noch vom neuen Anlagepunkt an von der Anlagefläche wegkrümmt. Das Flachdrükken dieses Wellenlinienabschnitts erfordert aufgrund der verkürzten Länge der freien Wellenlinienbereiche zwischen den Anlagepunkten höhere Kräfte. Diese Wirkung beruht wesentlich darauf, daß die Wellenlinienabschnitte nach Art von einseitig eingespannten belasteten Biegebalken geformt sind, die sich bei zunehmender Belastung zur Geraden biegen, analog zu einem zunehmenden Entlasten eines zuvor von einer Einzellast am freien Ende belasteten Biegebalkens.

Wellfedern gemäß der Erfindung eignen sich besonders als Anlage- oder Dämpfungsfedern für Lamellenkupplungen in Automatikgetrieben für Kraftfahrzeuge. Aufgrund der progressiven Federkennlinie treten früher vorkommende störende Anschlaggeräusche mit diesen Wellfedern nicht mehr auf. Insgesamt verbessern diese Wellfedern den Komfort beim Gangwechsel.

Ein bevorzugtes Ausführungsbeispiel einer erfindungsgemäßen Wellfeder ist im Vergleich mit der Wellenlinie einer Wellfeder nach dem Stand der Technik in den Zeichnungen dargestellt und wird nachstehend beschrieben.
- Figur 1: zeigt die Wellenlinie einer erfindungsgemäßen Wellfeder im Vergleich mit der Wellenlinie einer Wellfeder nach dem Stand der Technik nach ihren Höhen- und Umfangskoordinaten;
- Figur 2: zeigt die Federkennlinie einer erfindungsgemäßen Wellfeder
a) theoretisch berechnet,
b) am Realteil gemessen;
- Figur 3: zeigt eine erfindungsgemäße Wellfeder in unverformtem Zustand
a) in Seitenansicht,
b) in Draufsicht;
- Figur 4: zeigt eine erfindungsgemäße Wellfeder in verschiedenen Verkürzungsstufen (bei verschiedenen Hüben)
a) unverformt,
b) mit einem ersten Federweg h_{1,}
c) mit einem zweiten Federweg h₂;
- Figur 5: zeigt eine erfindungsgemäße Wellfeder in 3D - Darstellung.

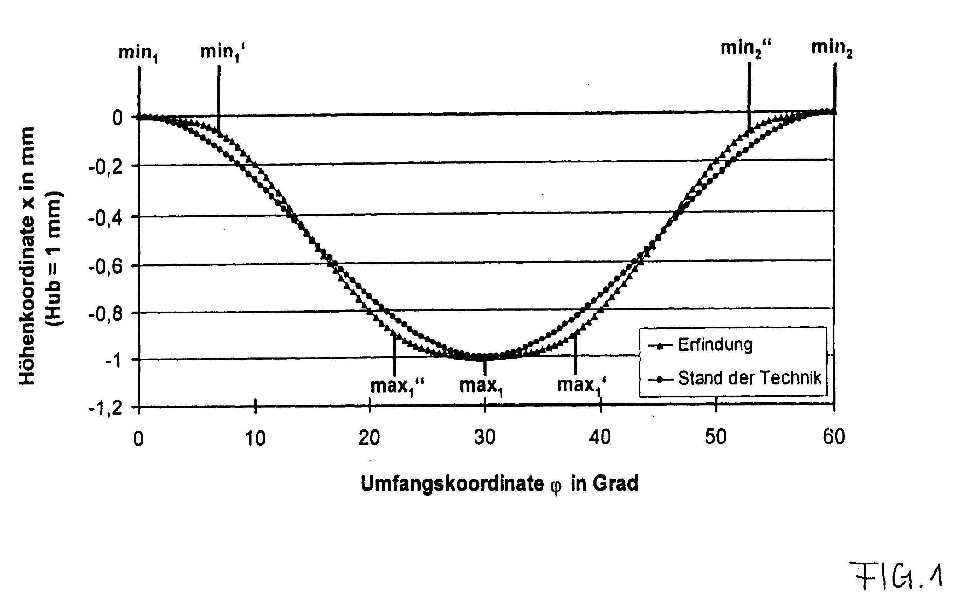

In Figur 1 ist die Wellenlinie einer Feder gemäß der Erfindung im Vergleich mit der Wellenlinie einer Feder nach dem Stand der Technik mit ihren Höhenkoordinaten über einem Umfangsbereich von 360°/6 Wellen = 60° dargestellt. Es ergibt sich hieraus, daß die beiden Wellfedern jeweils sechs mit den dargestellten gleichartige, aneinander anschließende Umfangsbereiche über insgesamt 360° aufweisen. Die Wellfeder nach dem Stand der Technik hat über dem dargestellten Umfangsbereich einen im wesentlichen cosinusförmigen Verlauf, wobei die Minima min1 und min2 und ein Maximum, max1, eingezeichnet sind. Diese stellen Anlagepunkte gegenüber zur x-Achse achsnormalen Anlageflächen, die sich in der Höhenebene x=0 und x= -1 befinden, dar. Bei einer axialen Verkürzung in Richtung der Höhenkoordinate x bleiben diese Anlagepunkte bei einer Feder nach dem Stand der Technik im wesentlichen erhalten, die Federrate ist hierbei über dem Hubweg in Richtung der x-Achse im wesentlichen konstant.

Demgegenüber ist bei einer Wellenlinie einer erfindungsgemäßen Wellfeder die Wellenlinie in verschiedene Bereiche aufgeteilt. Die Form der Wellenlinie in einem Bereich entspricht jeweils der Biegelinie eines gekrümmten Balkens. Ausgehend von den Minima min1 und min2 sowie dem Maximum max1 erfolgt die Verformung bei einer ersten Federrate r₁ in ersten Wellenlinienbereichen bis zu den Punkten min1',min2",max1',max1". In den daran anschließenden zweiten Wellenlinienbereichen erfolgt die Verformung bei einer zweiten höheren Federrate r₂. Der Übergang von einem Wellenlinienbereich zum nächsten Wellenlinienbereich ist gekennzeichnet durch die sich ausbildenden neuen Anlagepunkte min1',min2",max1',max1 "nach einem Flachdrücken der ersten Wellenlinienbereiche. Hierdurch verkürzt sich der Umfangsabstand der freien Wellenlinie zwischen den wirksamen Anlagepunkten.

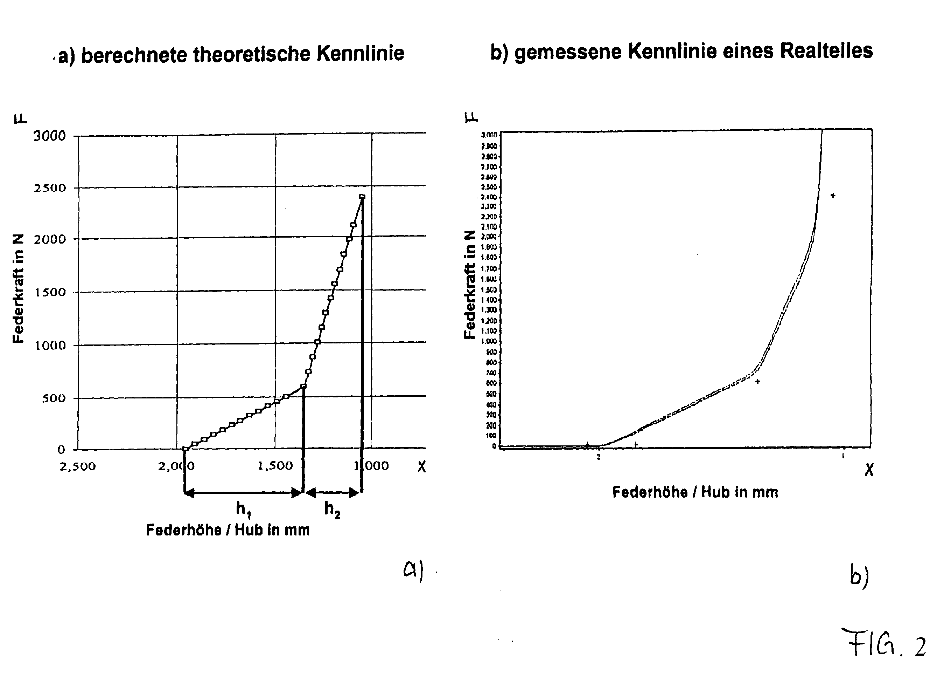

In Figur 2 ist für eine erfindungsgemäße Wellfeder mit dem Kurvenverlauf nach Figur 1 die Federkennlinie dargestellt, wobei die Verformungskräfte F über der Höhenkoordinate x aufgetragen sind. Ausgehend von der Wellenhöhe h findet ein erster Verkürzungsbereich (Hub) h₁ mit einer niedrigeren Federrate statt und ein sich daran anschließender zweiter Verkürzungsbereich (Hub) h₂ mit einer höheren Federrate. Darstellung a zeigt die berechnete theoretische Kennlinie, Darstellung b zeigt die gemessene Kennlinie eines Realteils.

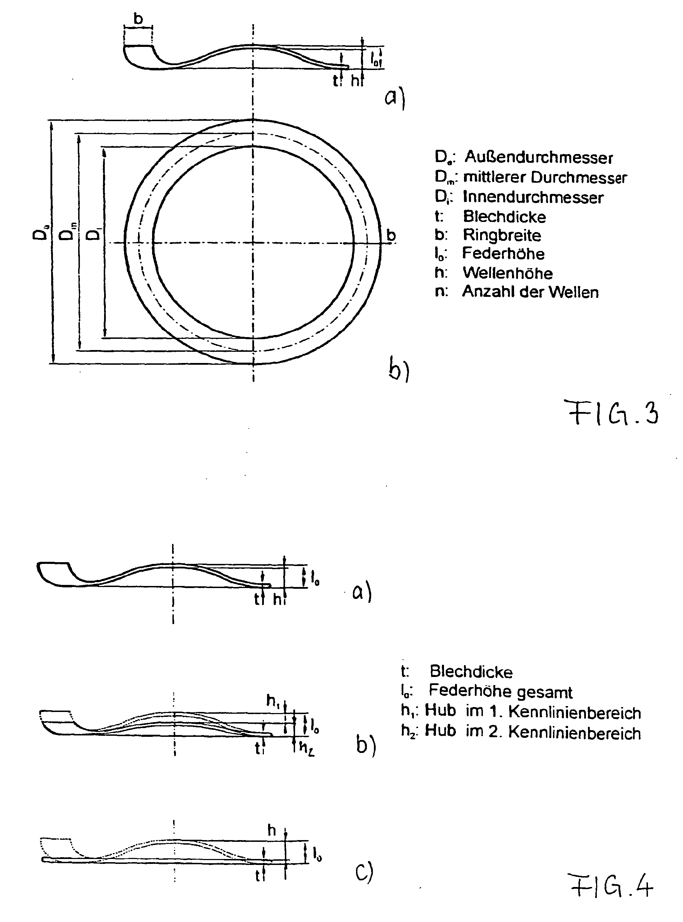

In Figur 3 ist eine erfindungsgemäße Wellfeder gezeigt, wobei in Darstellung b (Draufsicht) die folgenden Bemessungsgrößen zu erkennen sind
Dₑ : Außendurchmesser;
Dₘ: mittlerer Durchmesser;
Dᵢ : Innendurchmesser;
b : Ringbreite;
sowie in Darstellung a (Seitenansicht) die folgenden Bemessungsgrößen:
b : Ringbreite;
t : Ringdicke;
l₀ : Federhöhe;
h : Wellenhöhe.

In Figur 4 ist die Wellfeder nach Figur 3 nochmals in Seitenansicht dargestellt, und zwar in Darstellung a in unverformtem Zustand, sowie in Darstellung b bei Verformung um den axialen Hub h₁ im 1. Kennlinienbereich und in Darstellung c unter Verformung um den axialen Hub h₁ + h₂, wobei h₂ im 2. Kennlinienbereich liegt.

Hierbei sind die folgenden Bemessungsgrößen zu erkennen:
t : Blechdicke;
I₀ : Federhöhe;
h₁ : Hub im 1. Kennlinienbereich
h₂ : Hub im 2. Kennlinienbereich.

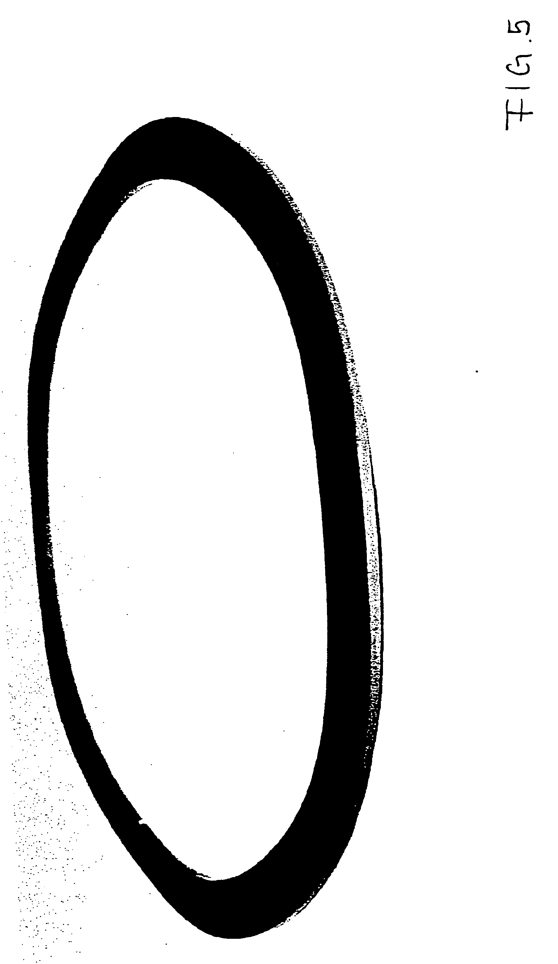

In Figur 5 ist eine erfindungsgemäße Wellfeder mit einer Anzahl von n=5 Wellenbereichen in 3D - Darstellung erkennbar.

## Patentansprüche

1. Axial wirksame Wellfeder aus einem geschlossenen Ringkörper mit einer zentralen x-Achse, der über dem Umfang periodisch gewellt ist, wobei die Wellenlinie zwischen einer Mehrzahl gleich großer Minima und gleich großer Maxima jeweils monoton steigend oder fallend verläuft und wobei in den Minima und den Maxima der Wellenlinie Anlagepunkte des Ringkörpers gegenüber achsnormalen Anlageflächen gebildet werden,
**dadurch gekennzeichnet,**
**daß** der Ringkörper von jedem Minimum und Maximum ausgehend in jeder Umfangsrichtung jeweils zumindest zwei aneinander anschließende Wellenlinienabschnitte aufweist, die bei zunehmender axialer Belastung des Ringkörpers einzeln nacheinander flachgedrückt werden und mit den Anlageflächen zur Anlage zu bringen sind.

2. Wellfeder nach Anspruch 1,
**dadurch gekennzeichnet,**
**daß** sich die Anlagepunkte des Ringkörpers an den Enden der freien Wellenlinienbereiche gegenüber den Anlageflächen bei zunehmender axialer Belastung diskontinuierlich von den ursprünglichen Minima und Maxima entfernen.

3. Wellfeder nach einem der Ansprüche 1 oder 2
**dadurch gekennzeichnet,**
**daß** die zumindest zwei aneinander anschließende Wellenlinienabschnitte jeweils den Krümmungslinien von am freien Ende mit einer Einzellast belasteten Biegebalken entsprechen, wobei den Krümmungslinien der einzelnen Wellenlinienabschnitte mit zunehmendem Abstand von den ursprünglichen Minima und Maxima zunehmende Einzellasten zugrunde liegen.

4. Wellfeder nach Anspruch 3,
**dadurch gekennzeichnet,**
**daß** die einzelnen Wellenlinienabschnitte mit engen Radien aneinander anschließen.

5. Wellfeder nach einem der Ansprüche 3 oder 4,
**dadurch gekennzeichnet,**
**daß** zumindest zwei Minima und zwei Maxima in der gesamten Wellenlinie vorgesehen sind.

6. Wellfeder nach einem der Ansprüche 1 bis 5,
**dadurch gekennzeichnet,**
**daß** der Ringkörper über dem Umfang jeweils gleichbleibende Breite b und Dicke t hat.

7. Wellfeder nach einem der Ansprüche 1 bis 5,
**dadurch gekennzeichnet,**
**daß** der Ringkörper außen und/oder innen eine Verzahnung als Drehsicherungsmittel aufweist.

## Claims

1. An axially effective undulating spring consisting of a closed annular member which comprises a central x-axis and which is periodically undulated across the circumference, wherein the undulation line extends between a plurality of identical minima and identical maxima, in each case monotonously rising or falling and wherein, in the minima and maxima of the undulation line there are formed contact points of the annular member relative to axis-normal contact faces,
**characterised in**
**that** the annular member, starting from each minimum and maximum, in each circumferential direction, comprises at least two adjoining undulation line portions which, with an increasing axial load on the annular member, are pressed into a flat condition and are brought into contact with the contact faces one after the other.

2. An undulating spring according to claim 1,
**characterised in**
**that**, with an increasing axial load, the contact points of the annular member, at the ends of the free undulating regions relative to the contact faces distance themselves discontinuously from the original minima and maxima.

3. An undulating spring according to any one of claims 1 or 2,
**characterised in**
**that** the at least two undulation line portions adjoining one another correspond to the lines of curvature of flexional beams loaded at the free end by an individual load, wherein, with an increasing distance from the original minima and maxima, the lines of curvature of the individual undulation line portions are based on increasing individual loads.

4. An undulating spring according to claim 3,
**characterised in**
**that** the individual undulation line portions adjoin one another with close radii.

5. An undulating spring according to any one of claims 3 or 4,
**characterised in**
**that** there are provided at least two minima and two maxima in the entire undulation line.

6. An undulating spring according to any one of claims 1 to 5,
**characterised in**
**that** the annular member comprises a uniform width b and thickness t around the circumference.

7. An undulating spring according to any one of claims 1 to 5,
**characterised in**
**that**, on its outside and/or on its inside, the annular member comprises teeth in the form of rotation preventing means.

## Revendications

1. Ressort ondulé à effet axial réalisé à partir d'un corps annulaire fermé présentant un axe central X, qui est ondulé de façon périodique sur la périphérie, la ligne des ondulations s'étendant en montant ou en descendant chaque fois de manière monotone entre une pluralité de minima de même taille et de maxima de même taille, et dans les minima et dans les maxima de la ligne des ondulations sont formés des points d'appui du corps annulaire par rapport à des surfaces d'appui normales vis-à-vis de l'axe,
**caractérisé en ce que**
en partant de chaque minimum et de chaque maximum et dans chaque direction périphérique, le corps annulaire comporte à chaque fois au moins deux tronçons, qui se raccordent mutuellement, de la ligne des ondulations qui, lors d'une mise en charge axiale croissante du corps annulaire, sont écrasés à plat individuellement et peuvent être amenés en appui contre les surfaces d'appui les uns après les autres.

2. Ressort ondulé selon la revendication 1,
**caractérisé en ce que** les points d'appui du corps annulaire aux extrémités des zones libres de la ligne des ondulations s'éloignent par rapport aux surfaces d'appui de façon discontinue depuis les minima et les maxima d'origine lorsque la mise en charge axiale croît.

3. Ressort ondulé selon l'une des revendications 1 ou 2,
**caractérisé en ce que** lesdits au moins deux tronçons, qui se raccordent mutuellement, de la ligne des ondulations correspondent chacun aux lignes de courbure de barreaux de flexion qui sont chargés à l'extrémité libre d'une charge individuelle, des charges individuelles croissantes en fonction de la croissance de la distance depuis les minima et les maxima d'origine formant la base pour les lignes de courbure des tronçons individuels de la ligne des ondulations.

4. Ressort ondulé selon la revendication 3,
**caractérisé en ce que** les tronçons individuels de la ligne des ondulations se raccordent les uns aux autres avec des rayons étroits.

5. Ressort ondulé selon l'une des revendications 3 ou 4,
**caractérisé en ce qu'**il est prévu au moins deux minima et deux maxima dans la totalité de la ligne des ondulations.

6. Ressort ondulé selon l'une des revendications 1 à 5,
**caractérisé en ce que** le corps annulaire présente sur la périphérie une largeur b et une épaisseur t qui restent chacune constante.

7. Ressort ondulé selon l'une des revendications 1 à 5,
**caractérisé en ce que** le corps annulaire comporte à l'extérieur et/ou à l'intérieur une denture à titre de moyens de blocage antirotation.
